# EUROPEAN PATENT APPLICATION

(11) **EP 4 521 498 A1**
(43) Date of publication of application: **12.03.2025**
(21) Application number: 23824088.1
(22) Date of filing: 04.05.2023
(51) Int. Cl.: H01M 8/04119

(54) **PACKING UNIT FOR FUEL CELL HUMIDIFIER, AND FUEL CELL HUMIDIFIER**

(30) Priority: 17.06.2022 KR 20220074277
(71) Applicant: Kolon Industries, Inc., Seoul 07793 (KR)
(72) Inventor: AHN, Woong Jeon, Seoul 07793 (KR); HER, Jung Kun, Seoul 07793 (KR); YANG, Hyoung Mo, Seoul 07793 (KR); KI, Sung Kwan, Seoul 07793 (KR); KIM, Do Woo, Seoul 07793 (KR)
(74) Representative: Vossius & Partner Patentanwälte Rechtsanwälte mbB
(86) International application number: PCT/KR2023/006089
(87) International publication number: WO 2023/243862

(57) **Abstract**

The present invention relates to a packing unit for a fuel cell humidifier, and a fuel cell humidifier, the packing unit comprising: a first packing body airtightly coupled to one end of a mid-case through mechanical assembly so that a first cap fluidically communicates only with hollow fiber membranes; and a condensate water discharge portion formed in the first packing body, wherein the condensate water discharge portion has one end fluidically communicating with the inside of the first cap and has the other end fluidically communicating with the inside of the mid-case so that condensate water located inside the first cap is discharged to the inside of the mid-case.

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC) .

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.
1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

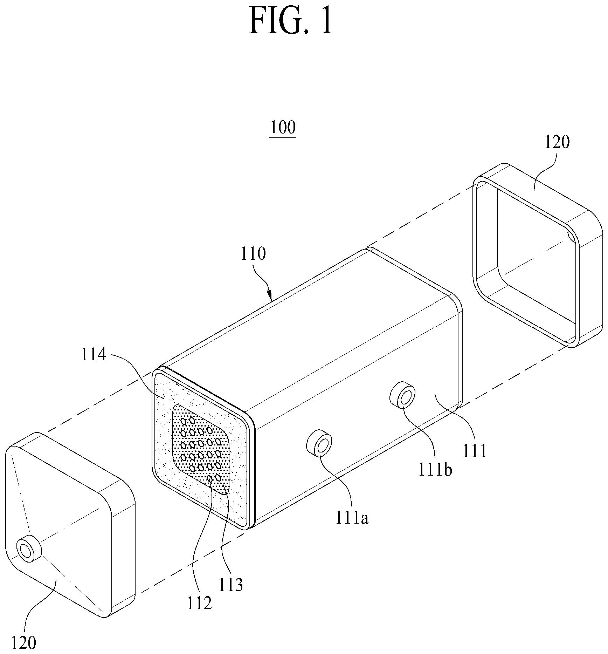

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a plurality of hollow fiber membranes 112 in the mid-case 111. Opposite ends of the hollow fiber membranes 112 are potted in fixing layers 113. In general, each of the fixing layers 113 is formed by hardening a liquid polymer, such as liquid polyurethane resin, using a casting method. The fixing layers 113, in which ends of the hollow fiber membranes 112 are potted, and resin layers 114 provided between the fixing layers 113 and the mid-case 111 isolate the inner spaces of the caps 120 from the inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membranes 112. Off-gas introduced into the mid-case 111 through the off-gas inlet 111a comes into contact with outer surfaces of the hollow fiber membranes 112, and is discharged from the mid-case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the hollows of the hollow fiber membranes 112. The humidified air is supplied to the fuel cell stack through a first cap 120, which is one of the caps 120.

In this case, the humidified air must be supplied to the fuel cell stack in a vapor state, and conventionally, condensate generated during the process of humidifying the air may be accumulated in the first cap 120, and the condensate accumulated in the first cap 120 may be supplied to the fuel cell stack along with the humidified air. Conventionally, therefore, flooding occurs and the condensate blocks a flow path of a separation plate of a fuel cell, thereby reducing efficiency and durability of a fuel cell system.

### [Disclosure]

### [Technical Problem]

The present disclosure has been made in view of the above problems, and it is an object of the present disclosure to provide a packing unit of a humidifier for fuel cells and a humidifier for fuel cells capable of reducing the flow rate of condensate supplied to a fuel cell stack.

### [Technical Solution]

In order to accomplish the above object, the present disclosure may include the following constructions.

A packing unit of a humidifier for fuel cells according to the present disclosure is provided in a humidifier for fuel cells, the humidifier including a humidifying module configured to humidify dry gas to be supplied to a fuel cell stack using wet gas, a first cap coupled to one end of the humidifying module, and a second cap coupled to the other end of the humidifying module, and may include a first packing body airtightly coupled to one end of a mid-case of the humidifying module through mechanical assembly such that the first cap is only in fluid communication with hollow fiber membranes of the humidifying module and a condensate discharge portion formed in the first packing body. One end of the condensate discharge portion may be in fluid communication with the interior of the first cap and the other end of the condensate discharge portion may be in fluid communication with the interior of the mid-case to discharge condensate in the first cap into the mid-case.

A humidifier for fuel cells according to the present disclosure may include a humidifying module configured to humidify dry gas to be supplied to a fuel cell stack using wet gas, a first cap coupled to one end of the humidifying module, and a second cap coupled to the other end of the humidifying module. The humidifying module may include a mid-case having open opposite ends, at least one cartridge including a plurality of hollow fiber membranes, and a first packing unit airtightly coupled to one end of the mid-case through mechanical assembly such that the first cap is only in fluid communication with the hollow fiber membranes. The first packing unit may include a first packing body configured to form a seal between the mid-case and the cartridge and a condensate discharge portion formed in the first packing body. One end of the condensate discharge portion may be in fluid communication with the interior of the first cap and the other end of the condensate discharge portion may be in fluid communication with the interior of the mid-case to discharge condensate in the first cap into the mid-case.

### [Advantageous Effects]

The present disclosure may discharge condensate in a first cap into a mid-case using a condensate discharged portion, thereby reducing the flow rate of condensate accumulated in the first cap. Accordingly, the present disclosure may reduce the flow rate of condensate supplied to a fuel cell stack. Consequently, the present disclosure may prevent flooding due to condensate, thereby contributing to improvement in efficiency and durability of a fuel cell system.

The present disclosure may be implemented such that the installation of the condensate discharge portion can be accomplished by simply coupling a first packing body to one end of the mid-case, since the condensate discharge portion is formed in the first packing body. Consequently, the present disclosure may improve the ease of installation of the condensate discharge portion.

The present disclosure is implemented such that the condensate discharge portion is formed in the first packing body having higher strength than a potting layer formed through a casting process. Accordingly, the present disclosure may reduce the flow rate of condensate supplied to the fuel cell stack using the condensate discharge portion, and at the same time may reduce the risk of damage to or breakage of the first packing body due to the condensate discharge portion, thereby preventing direct mixing of first gas and second gas, and therefore it is possible to improve humidification efficiency.

The present disclosure is implemented such that sealing between the mid-case and the cartridge is achieved through mechanical assembly of the first packing body without a casting process, whereby the installation of the condensate discharge portion is accomplished. Consequently, the present disclosure may contribute to reduction in the process time for manufacturing.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIGs. 5 and 6 are schematic plan views of a cartridge of the humidifier for fuel cells according to the present disclosure.
FIG. 7 is a schematic perspective view of a packing unit of the humidifier for fuel cells according to the present disclosure.
FIG. 8 is a schematic coupling sectional view of the humidifier for fuel cells according to the present disclosure, taken along line II-II of FIG. 7.
FIG. 9 is a schematic front view of the packing unit of the humidifier for fuel cells according to the present disclosure.
FIG. 10 is a schematic plan view of the packing unit of the humidifier for fuel cells according to the present disclosure.
FIG. 11 is a schematic coupling sectional view of a humidifier for fuel cells according to a modification of the present disclosure, taken along line II-II of FIG. 7.

### [Best Mode]

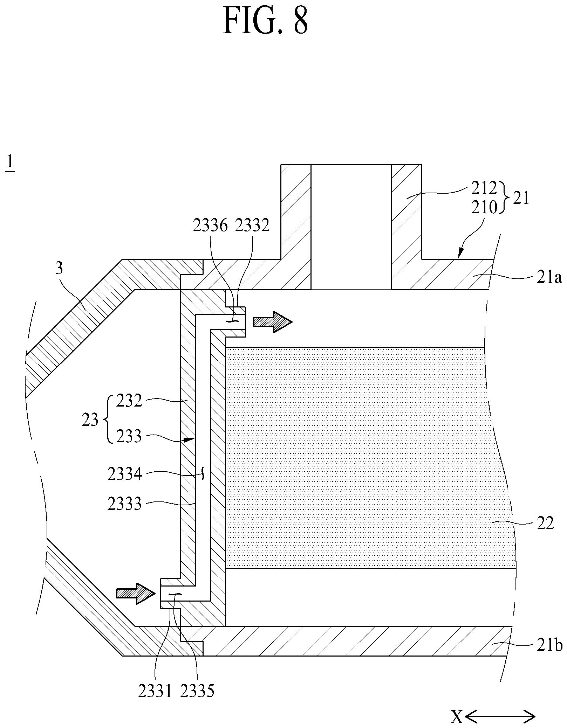

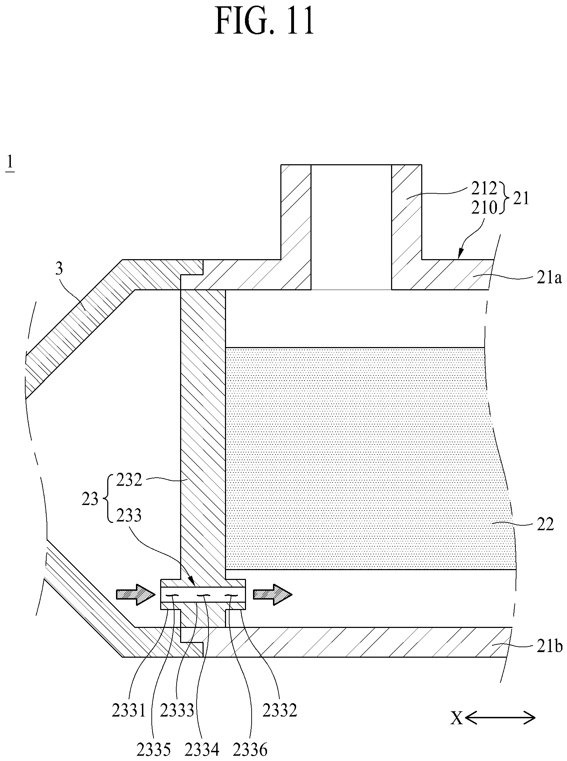

Hereinafter, an embodiment of a humidifier for fuel cells according to the present disclosure will be described in detail with reference to the accompanying drawings. A packing unit of a humidifier for fuel cells according to the present disclosure may be included in a humidifier for fuel cells according to the present disclosure, and therefore the packing unit of the humidifier for fuel cells according to the present disclosure will also be described while the humidifier for fuel cells according to the present disclosure is described. Meanwhile, in FIGs. 8 and 11, a cartridge is simply shown by hatching.

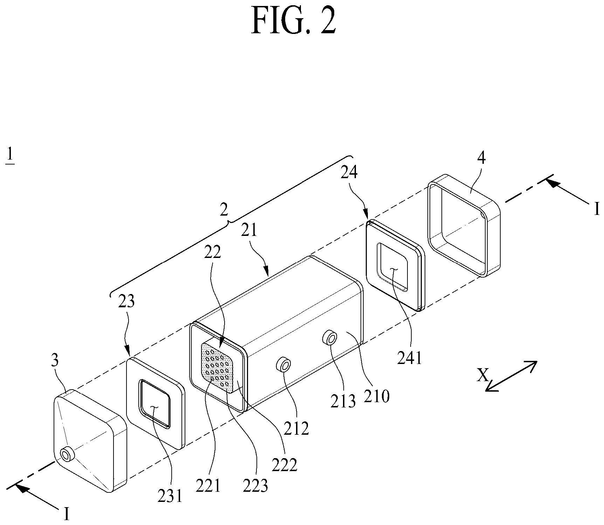

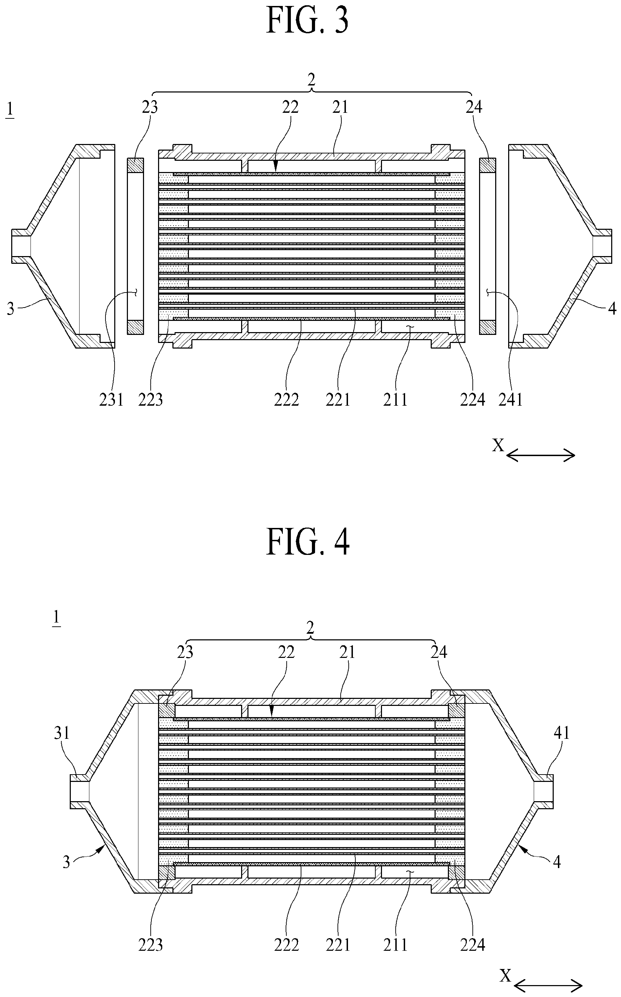

Referring to FIGs. 2 to 4, a humidifier 1 for fuel cells according to the present disclosure is configured to humidify dry gas to be supplied to a fuel cell stack (not shown) using wet gas. The wet gas may be discharged from the fuel cell stack. The dry gas may be fuel gas or air. The dry gas may be humidified by the wet gas, and may be supplied to the fuel cell stack. The humidifier 1 for fuel cells according to the present disclosure includes a humidifying module 2 configured to humidify dry gas, a first cap 3 coupled to one end of the humidifying module 2, and a second cap 4 coupled to the other end of the humidifying module 2.

Referring to FIGs. 2 to 4, the humidifying module 2 humidifies dry gas. The first cap 3 may be coupled to one end of the humidifying module 2. The second cap 4 may be coupled to the other end of the humidifying module 2. The humidifying module 2 may supply humidified dry gas to the fuel cell stack using first gas and second gas. When the first gas is dry gas, the second gas may be wet gas. In this case, the first gas may be humidified by the second gas and may then be supplied to the fuel cell stack. When the first gas is wet gas, the second gas may be dry gas. In this case, the second gas may be humidified by the first gas and may then be supplied to the fuel cell stack.

The humidifying module 2 includes a mid-case 21 and at least one cartridge 22.

The cartridge 22 is coupled to the mid-case 21. The cartridge 22 may be disposed in the mid-case 21. Opposite ends of the mid-case 21 are open. In this case, a receiving hole 211 may be formed in the mid-case 21. The receiving hole 211 may be formed so as to extend through the mid-case 21 in a first axis direction (X-axis direction). At least one cartridge 22 may be disposed in the receiving hole 211.

The mid-case 21 may include a mid body 210. The cartridge 22 is received in the mid body 210. The cartridge 22 may be disposed in the mid body 210 so as to be received in the mid body 210. At least one cartridge 22 may be received in the mid body 210. The receiving hole 211 may be formed through the mid body 210 in the first axis direction (X-axis direction).

A first gas inlet 212 and a first gas outlet 213 may be formed in the mid-case 21. The first gas inlet 212 may introduce the first gas into the mid-case 21. The first gas outlet 213 may discharge the first gas from the mid-case 21. Each of the first gas outlet 213 and the first gas inlet 212 may protrude from the mid-case 21.

The cartridge 22 is disposed in the mid-case 21. The cartridge 22 includes a plurality of hollow fiber membranes 221. The hollow fiber membranes 221 may be coupled to the cartridge 22 so as to be modularized. Consequently, the hollow fiber membranes 221 may be installed in the mid-case 21 through the process of coupling the cartridge 22 to the mid-case 21. In the humidifier 1 for fuel cells according to the present disclosure, therefore, ease in installation, separation, and replacement of the hollow fiber membranes 221 may be improved.

The cartridge 22 may include an inner case 222.

The inner case 222 has openings formed at opposite ends, and receives the hollow fiber membranes 221. The hollow fiber membranes 221 may be disposed in the inner case 222 so as to be modularized. Each of the hollow fiber membranes 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first fixing layer 223. The first fixing layer 223 is configured to fix one end of each of the hollow fiber membranes 221. The first fixing layer 223 may close the opening formed in one end of the inner case 222. In this case, the first fixing layer 223 may be formed so as not to block hollows of the hollow fiber membranes 221. The first fixing layer 223 may be formed by hardening a liquid resin, such as liquid polyurethane resin, through a casting process. A part of the first fixing layer 223 may be located in the inner case 222, and the remaining part of the first fixing layer may protrude outward from the inner case 222. The first fixing layer 223 may fix one end of each of the hollow fiber membranes 221 to the inner case 222.

The cartridge 22 may include a second fixing layer 224. The second fixing layer 224 is configured to fix the other end of each of the hollow fiber membranes 221. The second fixing layer 224 may close the opening formed in the other end of the inner case 222. In this case, the second fixing layer 224 may be formed so as not to block the hollows of the hollow fiber membranes 221. The second fixing layer 224 may be formed by hardening a liquid resin, such as liquid polyurethane resin, through a casting process. A part of the second fixing layer 224 may be located in the inner case 222, and the remaining part of the second fixing layer may protrude outward from the inner case 222. The second fixing layer 224 may fix the other end of each of the hollow fiber membranes 221 to the inner case 222. Since the second fixed layer 224 and the first fixed layer 223 are formed so as not to block the hollows of the hollow fiber membranes 221, the second gas may be supplied to the hollows of the hollow fiber membranes 221 without obstruction by the second fixed layer 224 and the first fixed layer 223, and may be discharged from the hollows of the hollow fiber membranes 221 without obstruction by the second fixed layer 224 and the first fixed layer 223.

Referring to FIGs. 2 to 6, the cartridge 22 may include a second gas inlet 225 and a second gas outlet 226.

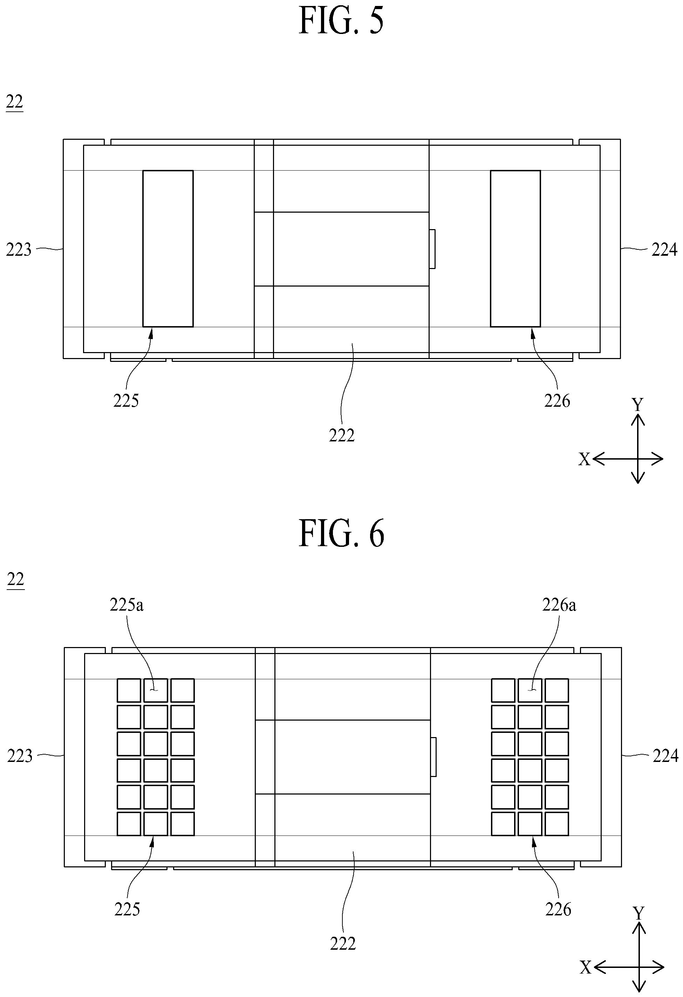

The second gas inlet 225 is formed at the inner case 222. The second gas inlet 225 may be formed at one side of the inner case 222. One side of the inner case 222 may be disposed so as to face any one of the side walls of the mid-case 21. The second gas inlet 225 may introduce the first gas into the inner case 222. The second gas inlet 225 may be formed through the inner case 222. As shown in FIG. 5, the second gas inlet 225 may be implemented by one through-hole formed through the inner case 222. As shown in FIG. 6, the second gas inlet 225 may be implemented by a plurality of through-holes formed through the inner case 222. In this case, the second gas inlet 225 may include a plurality of inflow windows 225a formed through different parts of the inner case 222. The inflow windows 225a may be disposed spaced apart from each other in the first axis direction (X-axis direction) and a second axis direction (Y-axis direction) so as to form a matrix. The second axis direction (Y-axis direction) is an axial direction perpendicular to the first axis direction (X-axis direction).

The second gas outlet 226 is formed at the inner case 222. The second gas outlet 226 may be formed at one side of the inner case 222. The second gas outlet 226 may discharge the first gas from the inner case 222. The second gas outlet 226 may be formed through the inner case 222. As shown in FIG. 5, the second gas outlet 226 may be implemented by one through-hole formed through the inner case 222. As shown in FIG. 6, the second gas outlet 226 may be implemented by a plurality of through-holes formed through the inner case 222. In this case, the second gas outlet 226 may include a plurality of outflow windows 226a formed through different parts of the inner case 222. The outflow windows 226a may be disposed spaced apart from each other in the first axis direction (X-axis direction) and the second axis direction (Y-axis direction) so as to form a matrix. The second gas outlet 226 and the second gas inlet 225 may be disposed spaced apart from each other in the first axis direction (X-axis direction).

When the first gas is wet gas, the first gas may be supplied to a space between an inner surface of the mid-case 21 and an outer surface of the cartridge 22 through the first gas inlet 212, may be supplied into the cartridge 22 through the second gas inlet 225, and may come into contact with outer surfaces of the hollow fiber membranes 221. During this process, moisture contained in the first gas may be transmitted through the hollow fiber membranes 221 to humidify second gas flowing along the hollows of the hollow fiber membranes 221. The humidified second gas may be discharged from the hollow fiber membranes 221, and may then be supplied to the fuel cell stack through the first cap 3 or the second cap 4. After humidifying the second gas, the first gas may be discharged to the space between the outer surface of the cartridge 22 and the inner surface of the mid-case 21 through the second gas outlet 226, and may be discharged from the mid-case 21 through the first gas outlet 213. In this case, the first gas may be off-gas discharged from the fuel cell stack.

When the first gas is dry gas, the first gas may be supplied to the space between the inner surface of the mid-case 21 and the outer surface of the cartridge 22 through the first gas inlet 212, may be supplied into the cartridge 22 through the second gas inlet 225, and may come into contact with the outer surfaces of the hollow fiber membranes 221. During this process, moisture contained in the second gas flowing along the hollows of the hollow fiber membranes 221 may be transmitted through the hollow fiber membranes 221 to humidify the first gas introduced into the cartridge 22. The humidified first gas may be discharged to the space between the outer surface of the cartridge 22 and the inner surface of the mid-case 21 through the second gas outlet 226, may be discharged from the mid-case 21 through the first gas outlet 213, and may be supplied to the fuel cell stack. After humidifying the first gas, the second gas may be discharged from the hollow fiber membranes 221, and may then be discharged to the outside through the first cap 3 or the second cap 4. In this case, the second gas may be off-gas discharged from the fuel cell stack.

The humidifying module 2 may include a first packing unit 23.

The first packing unit 23 is airtightly coupled to one end of the mid-case 21 through mechanical assembly. Accordingly, the first packing unit 23 may ensure that the first cap 3 is only in fluid communication with the hollow fiber membranes 221. Consequently, the first packing unit 23 may prevent direct mixing of the first gas and the second gas. The first packing unit 23 may be disposed between the mid-case 21 and the cartridge 22, thereby forming a seal between the mid-case 21 and the cartridge 22. In this case, the cartridge 22 may be inserted into a first insertion hole 231 formed in the first packing unit 23. The first packing unit 23 may be in contact with each of the inner surface of the mid-case 21, the outer surface of the cartridge 22, and the first fixing layer 223. The first packing unit 23 may be airtightly coupled to one end of the mid-case 21 through such contact. In this case, the first packing unit 23 may also be in contact with each of a part of the inner surface of the mid-case 21, a part of the outer surface of the cartridge 22, and a part of the first fixing layer 223.

The humidifying module 2 may include a second packing unit 24.

The second packing unit 24 is airtightly coupled to the other end of the mid-case 21 through mechanical assembly. Accordingly, the second packing unit 24 may ensure that the second cap 4 is only in fluid communication with the hollow fiber membranes 221. Consequently, the second packing unit 24 may prevent direct mixing of the first gas and the second gas. The second packing unit 24 may be disposed between the mid-case 21 and the cartridge 22, thereby forming a seal between the mid-case 21 and the cartridge 22. In this case, the cartridge 22 may be inserted into a second insertion hole 241 formed in the second packing unit 24. The second packing unit 24 may be in contact with each of the inner surface of the mid-case 21, the outer surface of the cartridge 22, and the second fixing layer 224. The second packing unit 24 may be airtightly coupled to the other end of the mid-case 21 through such contact. In this case, the second packing unit 24 may also be in contact with each of a part of the inner surface of the mid-case 21, a part of the outer surface of the cartridge 22, and a part of the second fixing layer 224.

Referring to FIGs. 2 to 4, the first cap 3 is coupled to one end of the humidifying module 2. A space between the first cap 3 and the cartridge 22 may be isolated from the space between the cartridge 22 and the mid-case 21 in a hermetically sealed state by the first packing unit 23. The first cap 3 may include a first port 31. The first port 31 is configured to allow the second gas to flow therethrough. The first port 31 may communicate with the hollow fiber membranes 221. In the process of the second gas flowing between the first cap 3 and the hollow fiber membranes 221, therefore, the second gas may be introduced or discharged through the first port 31.

Referring to FIGs. 2 to 4, the second cap 4 is coupled to the other end of the humidifying module 2. The second cap 4 may be coupled to the other end of the humidifying module 2 so as to be spaced apart from the first cap 3 in the first axis direction (X-axis direction). A space between the second cap 4 and the cartridge 22 may be isolated from the space between the cartridge 22 and the mid-case 21 in a hermetically sealed state by the second packing unit 24. The second cap 4 may include a second port 41. The second port 41 is configured to allow the second gas to flow therethrough. The second port 41 may communicate with the hollow fiber membranes 221. In the process of the second gas flowing between the second cap 4 and the hollow fiber membranes 221, therefore, the second gas may be introduced or discharged through the second port 41. When the second gas is introduced through the second port 41, the second gas may be discharged through the first port 31. In this case, the second gas may exchange moisture with the first gas while sequentially passing through the second cap 4, the hollows of the hollow fiber membranes 221, and the first cap 3. When the second gas is discharged through the second port 41, the second gas may be introduced through the first port 31. In this case, the second gas may exchange moisture with the first gas while sequentially passing through the first cap 3, the hollows of the hollow fiber membranes 221, and the second cap 4.

Here, in the humidifier 1 for fuel cells according to the present disclosure, condensate generated in the process of generating humidified dry gas using the first gas and the second gas may be accumulated in the first cap 3. When the condensate accumulated in the first cap 3 is supplied to the fuel cell stack together with the humidified dry gas, flooding may occur, causing the condensate to block a flow path of a separation plate of a fuel cell, thereby reducing efficiency and durability of a fuel cell system. In order to prevent this, the first packing unit 23 of the humidifier 1 for fuel cells according to the present disclosure may be implemented as follows. In this case, the first packing unit 23 may be implemented as the packing unit of the humidifier for fuel cells according to the present disclosure.

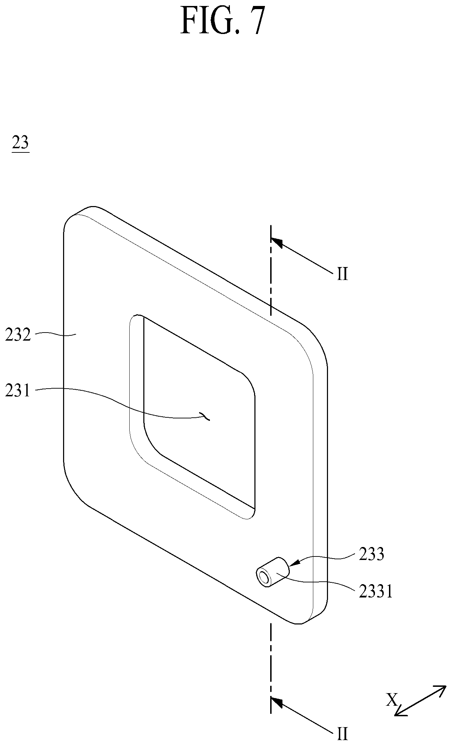

Referring to FIGs. 2 to 8, the first packing unit 23 may include a first packing body 232 and a condensate discharge portion 233.

The first packing body 232 forms a seal between the mid-case 21 and the cartridge 22. The first packing body 232 may be airtightly coupled to one end of the mid-case through mechanical assembly. Accordingly, the first packing body 232 may ensure that the first cap 3 is only in fluid communication with the hollow fiber membranes 221. The first insertion hole 231 may be formed through the first packing body 232. In this case, the cartridge 22 may be inserted into the first insertion hole 231 and disposed in the first packing body 232. The first packing body 232 may be made of rubber.

The condensate discharge portion 233 is formed in the first packing body 232. One end of the condensate discharge portion 233 may be in fluid communication with the interior of the first cap 3, and the other end of the condensate discharge portion may be in fluid communication with the interior of the mid-case 21. Accordingly, the condensate discharge portion 233 may discharge condensate in the first cap 3 into the mid-case 21. Consequently, the humidifier 1 for fuel cells according to the present disclosure may achieve the following effects.

First, the humidifier 1 for fuel cells according to the present disclosure may discharge condensate in the first cap 3 into the mid-case 21 using the condensate discharge portion 233, thereby reducing the flow rate of condensate accumulated in the first cap 3. Accordingly, the humidifier 1 for fuel cells according to the present disclosure may reduce the flow rate of condensate supplied to the fuel cell stack. Consequently, the humidifier 1 for fuel cells according to the present disclosure may prevent flooding due to condensate, thereby contributing to improvement in efficiency and durability of the fuel cell system.

Second, the humidifier 1 for fuel cells according to the present disclosure may be implemented such that the installation of the condensate discharge portion 233 can be accomplished by simply coupling the first packing body 232 to one end of the mid-case 21, since the condensate discharge portion 233 is formed in the first packing body 232. Consequently, the humidifier 1 for fuel cells according to the present disclosure may improve the ease of installation of the condensate discharge portion 233.

Third, in a comparative example in which a first potting layer is used to seal the gap between the mid-case 21 and the cartridge 22 instead of the first packing unit 23, the condensate discharge portion 233 is inserted into the first potting layer, whereby durability of the first potting layer may be reduced. This is because, in the comparative example, the first potting layer is formed by hardening a liquid resin, such as liquid polyurethane resin, through a casting process. Accordingly, the comparative example has a high risk of damage to or breakage of the first potting layer, such as cracks, which may lead to a decrease in humidification efficiency due to direct mixing of the first gas and the second gas.

In contrast, the humidifier 1 for fuel cells according to the present disclosure is implemented such that the condensate discharge portion 233 is formed in the first packing body 232 having higher strength than the first potting layer of the comparative example. Accordingly, the humidifier 1 for fuel cells according to the present disclosure may reduce the flow rate of condensate supplied to the fuel cell stack using the condensate discharge portion 233, and at the same time may reduce the risk of damage to or breakage of the first packing body 232 due to the condensate discharge portion 233, thereby preventing direct mixing of the first gas and the second gas, and therefore it is possible to improve humidification efficiency.

Fourth, in the comparative example using the first potting layer in place of the first packing unit 23, the casting process for forming the first potting layer takes a considerably long time, and therefore the work of sealing the gap between the mid-case 21 and the cartridge 22 and installing the condensate discharge portion 233 is performed for a considerably long time.

In contrast, the humidifier 1 for fuel cells according to the present disclosure is implemented such that sealing between the mid-case 21 and the cartridge 22 is achieved through mechanical assembly of the first packing body 232 without a casting process, whereby the installation of the condensate discharge portion 233 is accomplished. Consequently, the humidifier 1 for fuel cells according to the present disclosure may contribute to reduction in the process time for manufacturing.

The condensate discharge portion 233 and the first packing body 232 may be integrally formed. In this case, the condensate discharge portion 233 and the first packing body 232 may be integrally formed by injection molding. A part of the condensate discharge portion 233 may be implemented through a hole formed in the first packing body 232. As the condensate discharge portion 233 and the first packing body 232 are integrally formed, the humidifier 1 for fuel cells according to the present disclosure may omit the work for coupling the condensate discharge portion 233 and the first packing body 232 to each other, thereby contributing to further reduction in the process time for manufacturing.

The condensate discharge portion 233 may include an introduction member 2331.

The introduction member 2331 is in fluid communication with the interior of the first cap 3. The introduction member 2331 may function as a passageway through which condensate in the first cap 3 is introduced. The first packing body 232 may be disposed such that the introduction member 2331 faces the interior of the first cap 3.

The introduction member 2331 may be disposed at the position where the distance from a lower surface 21b (shown in FIG. 8) of the mid-case 21 is less than the distance from an upper surface 21a (shown in FIG. 8) of the mid-case 21. That is, the introduction member 2311 may be disposed closer to the lower surface 21b of the mid-case 21. Accordingly, the introduction member 2331 may be disposed at a lower side in the first cap 3, whereby it is possible to easily introduce condensate accumulated at the lower side in the first cap 3 by gravity. In addition, the introduction member 2331 may lower the level of condensate accumulated at the lower side in the first cap 3, thereby further reducing the flow rate of condensate supplied to the fuel cell stack. Meanwhile, the upper surface 21a of the mid-case 21 may be a side wall at which the first gas inlet 212 is disposed, among the side walls of the mid-case 21. The lower surface 21b of the mid-case 21 and the upper surface 21a of the mid-case 21 may be disposed opposite each other. The lower surface 21b of the mid-case 21 and the upper surface 21a of the mid-case 21 may be disposed spaced apart from each other in the second axis direction (Y-axis direction). The lower surface 21b of the mid-case 21 and the upper surface 21a of the mid-case 21 may be disposed spaced apart from each other in an axial direction perpendicular to each of the first axis direction (X-axis direction) and the second axis direction (Y-axis direction).

The introduction member 2331 may be formed in the first packing body 232 so as to protrude toward the interior of the first cap 3. Accordingly, the humidifier 1 for fuel cells according to the present disclosure may increase the depth by which the introduction member 2331 is inserted into the first cap 3, whereby it is possible to increase the flow rate of condensate accumulated in the first cap 3 introduced using the introduction member 2331.

The condensate discharge portion 233 may include a discharge member 2332.

The discharge member 2332 is in fluid communication with the interior of the mid-case 21. The discharge member 2332 may function as a passageway through which condensate is discharged into the mid-case 21. The first packing body 232 may be disposed such that the discharge member 2332 faces toward the interior of the mid-case 21.

The discharge member 2332 may be disposed at the position where the distance from the upper surface 21a of the mid-case 21 is less than the distance from the lower surface 21b of the mid-case 21. That is, the discharge member 2332 may be disposed closer to the upper surface 21a of the mid-case 21. Accordingly, the humidifier 1 for fuel cells according to the present disclosure may induce the condensate discharged into the mid-case 21 through the discharge member 2332 to flow toward the cartridge 22 by gravity. Consequently, the humidifier 1 for fuel cells according to the present disclosure may contribute to further increase in efficiency of the fuel cell system by further increasing humidification efficiency, since the condensate discharged through the discharge member 2332 can be used for humidification.

The discharge member 2332 may be formed in the first packing body 232 so as to protrude toward the interior of the mid-case 21. Accordingly, the humidifier 1 for fuel cells according to the present disclosure may increase the depth by which the discharge member 2332 is inserted into the mid-case 21, thereby reducing the flow distance for the condensate discharged through the discharge member 2332 to be introduced into the second gas inlet 225 of the cartridge 22. Consequently, the humidifier 1 for fuel cells according to the present disclosure may further increase the flow rate of condensate used for humidification in the condensate discharged through the discharge member 2332.

The discharge member 2332 may discharge condensate between the first gas inlet 212 and the cartridge 22. Accordingly, the humidifier 1 for fuel cells according to the present disclosure may discharge condensate toward the first gas introduced into the mid-case 21 through the first gas inlet 212, thereby increasing the humidity of the first gas and thus further increasing humidification efficiency. In this case, the first gas may correspond to wet gas. The discharge member 2332 may be formed in the first packing body 232 at the position where condensate can be discharged between the first gas inlet 212 and the cartridge 22. The discharge member 2332 may be formed so as to protrude from the first packing body 232 at the position corresponding to the gap between the first gas inlet 212 and the cartridge 22.

The condensate discharge portion 233 may include a connection member 2333.

The connection member 2333 is formed in the first packing body 232 so as to connect the introduction member 2331 and the discharge member 2332 to each other. Condensate introduced through the introduction member 2331 may flow along the connection member 2333 and may be discharged into the mid-case 21 through the discharge member 2332. In this case, the condensate may be discharged into the mid-case 21 by flowing along the introduction member 2331, the connection member 2333, and the discharge member 2332 due to the pressure difference between the internal pressure of the first cap 3 and the internal pressure of the mid-case 21. The connection member 2333 may be connected to each of the introduction member 2331 and the discharge member 2332 in the first packing body 232.

The connection member 2333 may include a connection hole 2334. The connection hole 2334 may extend in the first packing body 232 in the direction in which the upper surface 21a of the mid-case 21 and the lower surface 21b of the mid-case 21 are spaced apart from each other. Accordingly, the discharge member 2333 disposed closer to the upper surface 21a of the mid-case 21 and the introduction member 2331 disposed closer to the lower surface 21b of the mid-case 21 may be connected to each other via the connection hole 2334. The connection hole 2334 may be formed through the connection member 2333. The connection member 2333 may correspond to a part of the first packing body 232.

A lower end of the connection hole 2334 may be connected to an introduction hole 2335 of the introduction member 2331. The introduction hole 2335 may be connected to each of the interior of the first cap 3 and the lower end of the connection hole 2334. The introduction hole 2335 may be formed through the introduction member 2331.

An upper end of the connection hole 2334 may be connected to a discharge hole 2336 of the discharge member 2332. The discharge hole 2336 may be connected to each of the interior of the mid-case 21 and the upper end of the connection hole 2334. The discharge hole 2336 may be formed through the discharge member 2332. The discharge hole 2336, the connection hole 2334, and the introduction hole 2335 may be connected to each other in fluid communication with each other. Accordingly, condensate may be introduced through the introduction hole 2335, may flow to the discharge hole 2336 via the connection hole 2334, and may be discharged into the mid-case 21 through the discharge hole 2336.

Referring to FIGs. 2 to 10, the first packing unit 23 may include a plurality of first insertion holes 231. The first insertion holes 231 and 231' are formed through the first packing body 232. The first insertion holes 231 and 231' may be formed through the first packing body 232 so as to be spaced apart from each other. The cartridge 22 may be inserted into each of the first insertion holes 231 and 231'. Consequently, the humidifier 1 for fuel cells according to the present disclosure is implemented such that a plurality of cartridges 22 can be received in the mid-case 21. The first packing body 232 may be in tight contact with the cartridge 22 inserted into each of the first insertion holes 231 and 231' to form a seal between the outer surface of each of the cartridges 22 and the inner surface of the mid-case 21.

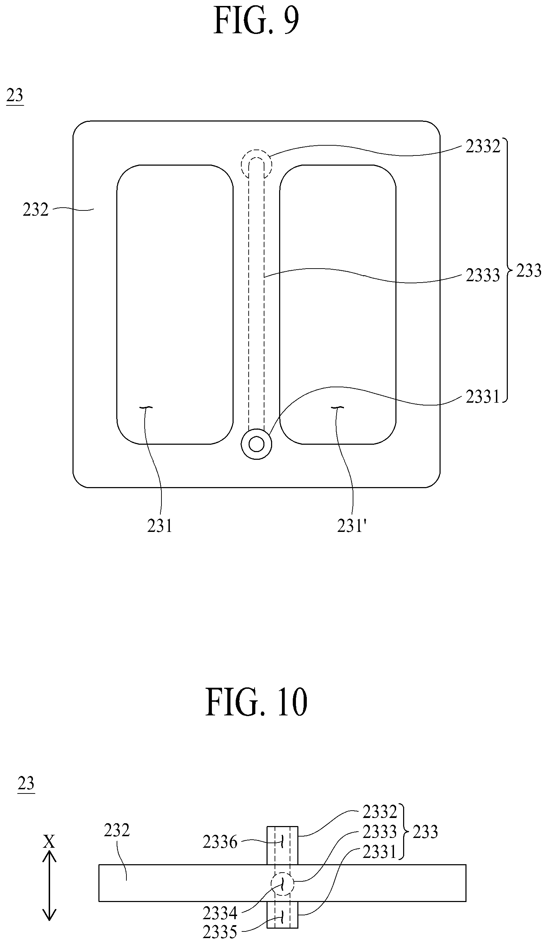

When the first insertion holes 231 and 231' are provided, the condensate discharge portion 233 may be disposed between the first insertion holes 231 and 231'. Accordingly, the humidifier 1 for fuel cells according to the present disclosure may implement the condensate discharge portion 233 using the part of the first packing body 232 left as the result of the first insertion holes 231 and 231' being spaced apart from each other. Consequently, the humidifier 1 for fuel cells according to the present disclosure is implemented such that the condensate discharge portion 233 can be formed in the first packing body 232 without increasing the overall size of the first packing body 232 or while reducing the increase rate of the overall size of the first packing body 232. In FIG. 9, two first insertion holes 231 and 231' are shown as being formed in the first packing body 232; however, the present disclosure is not limited thereto and three or more first insertion holes 231 may be formed in the first packing body 232. In this case, the condensate discharge portion 233 may be disposed among the first insertion holes 231. Two or more condensate discharge portion 233 may be formed in the first packing body 232.

Meanwhile, as shown in FIG. 10, the discharge member 2332 and the introduction member 2331 may protrude from the first packing body 232 so as to have different lengths. The discharge member 2332 and the introduction member 2331 may protrude from opposite surfaces of the first packing body 232 in opposite directions. The discharge member 2332 and the introduction member 2331 may extend parallel to the first axis direction (X-axis direction). The discharge member 2332 may protrude so as to have a larger length than the introduction member 2331. Accordingly, the humidifier 1 for fuel cells according to the present disclosure may further increase the flow rate of condensate toward first gas introduced through the first gas inlet 212 by reducing the distance between the discharge member 2332 and the first gas inlet 212. Consequently, the humidifier 1 for fuel cells according to the present disclosure may further increase the humidity of first gas using condensate discharged through the discharge member 2332.

Meanwhile, in a humidifier 1 for fuel cells according to a modification of the present disclosure, the condensate discharge portion 233 may be implemented such that the introduction member 2331 and the discharge member 2332 are disposed at the same height, as shown in FIG. 11. In this case, the introduction member 2331 and the discharge member 2332 may be disposed at positions spaced apart from the lower surface 21b of the mid-case 21 by the same distance. The introduction member 2331 and the discharge member 2332 may be disposed at the positions where the distance from the lower surface 21b of the mid-case 21 is less than the distance from the upper surface 21a of the mid-case 21. The introduction member 2331, the discharge member 2332, and the connection member 2333 may be disposed at the same height. In this case, the connection member 2333 may extend in the direction in which the introduction member 2331 and the discharge member 2332 are spaced apart from each other. The introduction hole 2335, the connection hole 2334, and the discharge hole 2336 may be formed so as to be connected to each other at the same height. In this case, the introduction hole 2335, the connection hole 2334, and the discharge hole 2336 may be formed such that the introduction member 2331 and the discharge member 2332 are connected to each other in a straight line in the direction in which the introduction member and the discharge member are spaced apart from each other.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A packing unit provided in a humidifier for fuel cells, the humidifier comprising a humidifying module configured to humidify dry gas to be supplied to a fuel cell stack using wet gas, a first cap coupled to one end of the humidifying module, and a second cap coupled to the other end of the humidifying module, the packing unit comprising:
a first packing body airtightly coupled to one end of a mid-case of the humidifying module through mechanical assembly such that the first cap is only in fluid communication with hollow fiber membranes of the humidifying module; and
a condensate discharge portion formed in the first packing body, wherein
one end of the condensate discharge portion is in fluid communication with an interior of the first cap and the other end of the condensate discharge portion is in fluid communication with an interior of the mid-case to discharge condensate in the first cap into the mid-case.

2. The packing unit according to claim 1, wherein the condensate discharge portion comprises:
an introduction member in fluid communication with the interior of the first cap, the introduction member being configured to allow the condensate in the first cap to be introduced therethrough;
a discharge member in fluid communication with the interior of the mid-case, the discharge member being configured to allow the condensate to be discharged into the mid-case therethrough; and
a connection member formed in the first packing body so as to connect the introduction member and the discharge member to each other.

3. The packing unit according to claim 1, wherein
the condensate discharge portion comprises an introduction member in fluid communication with the interior of the first cap, and
the introduction member is disposed at a position where a distance from a lower surface of the mid-case is less than a distance from an upper surface of the mid-case.

4. The packing unit according to claim 1, wherein
the condensate discharge portion comprises an introduction member in fluid communication with the interior of the first cap, and
the introduction member is formed in the first packing body so as to protrude toward the interior of the first cap.

5. The packing unit according to claim 1, wherein
the condensate discharge portion comprises a discharge member in fluid communication with the interior of the mid-case, and
the discharge member is disposed at a position where a distance from an upper surface of the mid-case is less than a distance from a lower surface of the mid-case.

6. The packing unit according to claim 1, wherein
the condensate discharge portion comprises a discharge member in fluid communication with the interior of the mid-case, and
the discharge member is formed in the first packing body so as to protrude toward the interior of the mid-case.

7. The packing unit according to claim 1, wherein
the condensate discharge portion comprises a discharge member in fluid communication with the interior of the mid-case, and
the discharge member discharges condensate between a first gas inlet configured to allow first gas to be introduced into the mid-case therethrough and a cartridge of the humidifying module.

8. The packing unit according to claim 2, wherein
the connection member comprises a connection hole extending in the first packing body in a direction in which an upper surface of the mid-case and a lower surface of the mid-case are spaced apart from each other,
the introduction member comprises an introduction hole connected to each of the interior of the first cap and a lower end of the connection hole, and
the discharge member comprises a discharge hole connected to each of the interior of the mid-case and an upper end of the connection hole.

9. The packing unit according to claim 1, comprising:
a plurality of first insertion holes formed through the first packing body, wherein
a cartridge of the humidifying module is inserted into each of the first insertion holes, and
the condensate discharge portion is disposed between the first insertion holes.

10. The packing unit according to claim 1, wherein the first packing body and the condensate discharge portion are integrally formed.

11. A humidifier for fuel cells, the humidifier comprising:
a humidifying module configured to humidify dry gas to be supplied to a fuel cell stack using wet gas;
a first cap coupled to one end of the humidifying module; and
a second cap coupled to the other end of the humidifying module, wherein
the humidifying module comprises:
a mid-case having open opposite ends;
at least one cartridge comprising a plurality of hollow fiber membranes; and
a first packing unit airtightly coupled to one end of the mid-case through mechanical assembly such that the first cap is only in fluid communication with the hollow fiber membranes,
the first packing unit comprises a first packing body configured to form a seal between the mid-case and the cartridge and a condensate discharge portion formed in the first packing body, and
one end of the condensate discharge portion is in fluid communication with an interior of the first cap and the other end of the condensate discharge portion is in fluid communication with an interior of the mid-case to discharge condensate in the first cap into the mid-case.

12. The humidifier according to claim 11, wherein the condensate discharge portion comprises:
an introduction member in fluid communication with the interior of the first cap, the introduction member being configured to allow the condensate in the first cap to be introduced therethrough;
a discharge member in fluid communication with the interior of the mid-case, the discharge member being configured to allow the condensate to be discharged into the mid-case therethrough; and
a connection member formed in the first packing body so as to connect the introduction member and the discharge member to each other.

13. The humidifier according to claim 11, wherein
the condensate discharge portion comprises an introduction member in fluid communication with the interior of the first cap, and
the introduction member is disposed at a position where a distance from a lower surface of the mid-case is less than a distance from an upper surface of the mid-case.

14. The humidifier according to claim 11, wherein
the condensate discharge portion comprises an introduction member in fluid communication with the interior of the first cap, and
the introduction member is formed in the first packing body so as to protrude toward the interior of the first cap.

15. The humidifier according to claim 11, wherein
the condensate discharge portion comprises a discharge member in fluid communication with the interior of the mid-case, and
the discharge member is disposed at a position where a distance from an upper surface of the mid-case is less than a distance from a lower surface of the mid-case.

16. The humidifier according to claim 11, wherein
the condensate discharge portion comprises a discharge member in fluid communication with the interior of the mid-case, and
the discharge member is formed in the first packing body so as to protrude toward the interior of the mid-case.

17. The humidifier according to claim 11, wherein
the condensate discharge portion comprises a discharge member in fluid communication with the interior of the mid-case,
the mid-case comprises a first gas inlet configured to allow first gas to be introduced therethrough, and
the discharge member discharges condensate between the first gas inlet and the cartridge.

18. The humidifier according to claim 12, wherein
the connection member comprises a connection hole extending in the first packing body in a direction in which an upper surface of the mid-case and a lower surface of the mid-case are spaced apart from each other,
the introduction member comprises an introduction hole connected to each of the interior of the first cap and a lower end of the connection hole, and
the discharge member comprises a discharge hole connected to each of the interior of the mid-case and an upper end of the connection hole.

19. The humidifier according to claim 11, wherein
the first packing unit comprises a plurality of first insertion holes formed through the first packing body,
the cartridge is inserted into each of the first insertion holes, and
the condensate discharge portion is disposed between the first insertion holes.

20. The humidifier according to claim 11, wherein the first packing body and the condensate discharge portion are integrally formed.
